# EUROPEAN PATENT APPLICATION

(11) **EP 2 263 915 A1**
(43) Date of publication of application: **22.12.2010**
(21) Application number: 09162987.3
(22) Date of filing: 17.06.2009
(51) Int. Cl.: B60Q 1/26

(54) **Automotive rear lamp unit**

(71) Applicant: Osram Opto Semiconductors Gmbh, 93055 Regensburg (DE)
(72) Inventor: Sheng, Frank, Shanghai 200001 (CN); Zhou, Jenny, 200256, Shanghai (CN); Chen, Kenny, 200001, Shanghai (CN); Wu, Vincent, 201206, Shanghai (CN)
(74) Representative: Epping - Hermann - Fischer

(57) **Abstract**

An Automotive rear lamp unit (1) is described which comprises
- a lamp unit (2) having a plurality of LEDs (4),
- a data storage device (3) for storing a plurality of predefined light patterns, and
- a control unit (5) connected to the data storage device (3) and the lamp unit (2) for operating the LEDs according to the predefined light patterns.

## Description

The invention concerns an automotive rear lamp unit, in particular an automotive rear lamp unit comprising a plurality of LEDs, and a method for operating the automotive rear lamp unit.

Automotive rear lamps serve as visual indicators of the driver's actions and/or intentions to other drivers or pedestrians. An automotive rear lamp can be designed as a so-called rear combination lamp (RCL), wherein multiple lamp functions are combined. For example, a rear combination lamp can act both as back light and brake light. An automotive rear combination lamp is known from the document US 6,461,027, for example.

The light pattern which is emitted by an automotive rear lamp can be designed in different ways as long as legal requirements are fulfilled. However, in current automotive rear lamps, there is no possibility to change or control the lighting pattern by the user, in particular the car driver.

The invention is based on the object to specify an improved automotive rear lamp unit an a method for operating an automotive rear lamp unit which allows the lighting pattern which is emitted by the rear lamp to be changed.

This object is achieved by means of an automotive rear lamp init comprising the features of patent claim 1 and a method for operating an automotive rear lamp unit comprising the features of claim 6. The dependent claims relate to advantageous configurations and developments of the invention.

According to a preferred embodiment, an automotive rear lamp unit comprises a lamp unit which comprises a plurality of LEDs. Furthermore, the rear lamp unit comprises a data storage device for storing a plurality of pre-defined light patterns, and a control unit connected to the data storage device and the lamp unit for controlling the LEDs according to the predefined light patterns.

In this way, it is advantageously achieved that the appearance of the automotive rear lamp unit can be changed to different predefined light patterns which are stored in the data storage device. The plurality of LEDs can have any two-dimensional or three-dimensional arrangement. In particular, the plurality of LEDs can be arranged in a two-dimensional LED array.

A "light pattern" according to the present application comprises the information which of the plurality of LEDs are operated. Furthermore, the LEDs of the light pattern can be operated at different powers. Therefore, not only the positions of the operated LEDs can be different in different light patterns, but also the brightness of the different LEDs can vary between different light patterns.

In a preferred embodiment, the control unit or the data storage device comprises an interface for downloading the predefined light patterns. For example, the control unit or the data storage device can be connected to an external computer or external data storage device for transferring predefined light patterns to the data storage device of the automotive rear lamp unit. It may be possible, for example, that the user can select from predefined light patterns on a website of the car manufacturer and transfer this data to the data storage device of the automotive rear lamp unit.

It is also possible that the data storage device is a removable medium. For example, the data storage device can be a CD, a DVD or an SD card. In this case, the predefined light patterns can be changed by exchanging the removable medium by the user.

In a preferred embodiment, the control unit is adapted for allowing the selection of at least one of the predefined light patterns by the user. In this way, the user can select a light pattern that suits his personal taste from the plurality of predefined light patterns. The user has also the possibility to choose a different light pattern from time to time. It is preferred that the control unit allows the user to choose between different predefined light patterns, but does not allow the user to define or change a light pattern. This is because the predefined light patterns must be compliant with legal requirements for automotive rear lamps.

In particular, the control unit can be programmed in such a way that only certified predefined light patterns which are provided by the car manufacturer can be used. A plurality of such certified predefined light patterns can be stored in the data storage device or can be provided to the user for downloading from a website or on a removal medium by the car manufacturer.

In a preferred embodiment, the plurality of LEDs forms an LED array. In particular, the LED array can be a rectangular or square LED array. Alternatively, also other two-dimensional or three-dimensional arrangements of LEDs are possible.

A method for operating an automotive rear lamp unit comprises, according to a preferred embodiment, storing a plurality of predefined light patterns in the data storage device and operating the LEDs of the lamp according to at least one of the predefined light patterns.

In a preferred embodiment, the at least one light pattern is selectable by a user from the plurality of predefined light patterns.

It is also possible that the control unit automatically changes the light pattern from time to time. For example, the control unit automatically selects one of the predefined light patterns each time the driver switches the light on at random.

Preferably, the rear lamp unit functions both as rear lamp and brake lamp. In this case, at least one of the predefined light patterns is used as a rear lamp light pattern and a different predefined light pattern is used as a brake lamp light pattern. In particular, it is possible that the user selects one of the predefined light patterns as a rear lamp light pattern and one of the predefined light patterns as a brake lamp light pattern.

In a preferred embodiment, the rear lamp light pattern and the brake lamp light pattern are different with respect to the operated LEDs. This means that one ore more LEDs which are operated in the brake lamp light pattern are not operated in the rear lamp light pattern, or vice-versa. The use of different light patterns for the rear lamp and the brake lamp is advantageous in comparison with rear lamps and brake lamps which differ only in the brightness of the LEDs because a change of the light pattern in case of braking can additionally symbolize that the car slows down.

For example, the rear lamp light pattern can be a bar that symbolizes that the car runs at nearly constant speed and the brake lamp light pattern can be a cross that symbolizes that the car slows down.

In a further preferred embodiment, at least one of the predefined light patterns is not constant in time. This means that at least one of the LEDs in the predefined light pattern temporally changes between the on-state and the off-state. For example, it is possible that adjacent LEDs are turned on and turned off successively in order to create the effect of a moving element in the light pattern.

Further features and advantages of the invention emerge from the description of the exemplary embodiments in conjunction with the figures.

In the figures:
- FIG. 1: shows a schematic block diagram of an automotive rear lamp unit according to an exemplary embodiment of the invention,
- FIGs. 2 to 6: show an exemplary embodiment of the lamp in the automotive rear lamp unit in different states of operation, and
- FIGs. 7 and 8: show a further embodiment of the lamp in the automotive rear lamp unit in two different states of operation.

Identical elements or elements having the same effect are provided with the same reference symbols in the figures. The figures should not be regarded as being to scale, and in fact, individual elements may have their size exaggerated for illustrative purposes.

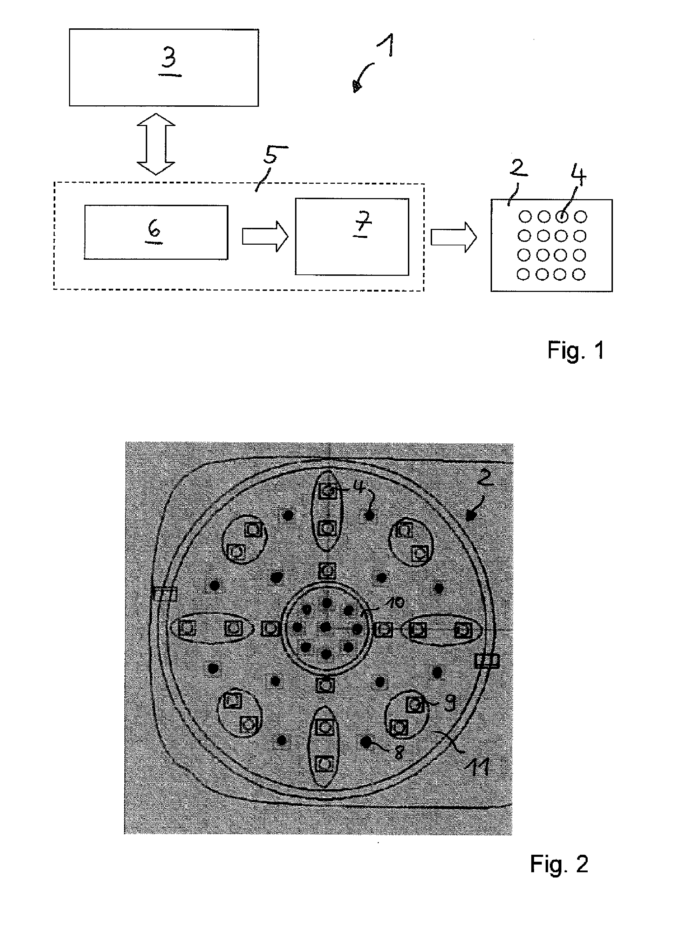

FIG. 1 shows a schematic block diagram of an automotive rear lamp unit 1 according to an exemplary embodiment of the invention. The automotive rear lamp unit 1 comprises a lamp 2 which is preferably a so-called rear combination lamp, that means it is a lamp 2 which functions both as a rear lamp and a brake lamp. The lamp 2 comprises a plurality of LEDs 4.

As shown, the LEDs 4 can be arranged in a rectangular two-dimensional LED array. However, also other two-dimensional or three-dimensional arrangements of the plurality of LEDs 4 are possible.

The LEDs 4 in the lamp 2 typically emit red light. In particular, the LEDs 4 of the lamp 2 can comprise light emitting semiconductor chips which are based on an arsenide compound semiconductor material.

The lamp 2 is operated by a control unit 5. The control unit 5 can comprise a micro-controller unit 6 and an LED operating unit 7. The control unit 5 is connected to a data storage device 3 in which a plurality of predefined light patterns can be stored.

The micro-controller 6 of the control unit 5 can access the data storage device 5 to select a light pattern for operating the lamp 2. The LED operating unit 7 receives the information of the selected light pattern from the micro-controller unit 6 and processes the data into operating signals for the LEDs 4. In particular, the LED operating unit 7 supplies power to the LEDs 4 which are operated in the selected light pattern. The LED operating unit 7 also controls the brightness of the LEDs 4 according to the selected light pattern, for example by pulse width modulation.

The automotive rear lamp unit 1 advantageously allows a user to select the light pattern for the rear lamp and/or the brake lamp from the plurality of predefined light patterns which are stored in the data storage device 3. For this reason, the control unit comprises a user interface, for example a switch in the instrument panel of the car, that allows to switch between different predefined light patterns which are stored in the data storage device 3.

Preferably, the control unit 5 or the data storage device 3 comprises an interface for downloading predefined light patterns from an external computer or an external data storage device. This makes it possible for a user to download light patterns from a website of a car manufacturer, for example, and to transfer the data to the data storage device 3 of the automotive rear lamp unit 1.

It is also possible that the data storage device 3 is a removable medium, for example a CD or DVD or an SD card. This makes it possible to change the plurality of predefined light patterns by exchanging the removable medium.

The data storage device 3 can be integrated in the control unit 5. Furthermore, the data storage device 3 and/or the control unit 5 may be integrated in the lamp 2.

It is also possible that the control unit 5 changes the light pattern from time to time. For example, it is possible that the control unit 5 automatically selects one of the predefined light patterns in the data storage device 3 each time the driver of the car turns on the lights.

Preferably, the lamp 2 has both the function of a rear lamp and a brake lamp. It is possible that the same predefined light pattern is used both for the rear lamp and the brake lamp except for the fact that the LEDs of the brake lamp light pattern are operated with a higher power to achieve a higher brightness.

In a particular preferred embodiment, different LEDs 4 are operated in the predefined light patterns for the rear lamp and the brake lamp. In the latter case, the data storage device 3 comprises a plurality of predefined light patterns for the rear lamp and a plurality of different light patterns for the brake lamp which in each case fulfill the legal requirements for being used in a car. The user can preferably select one of the predefined light patterns for the rear lamp and one of the predefined light patterns for the brake lamp.

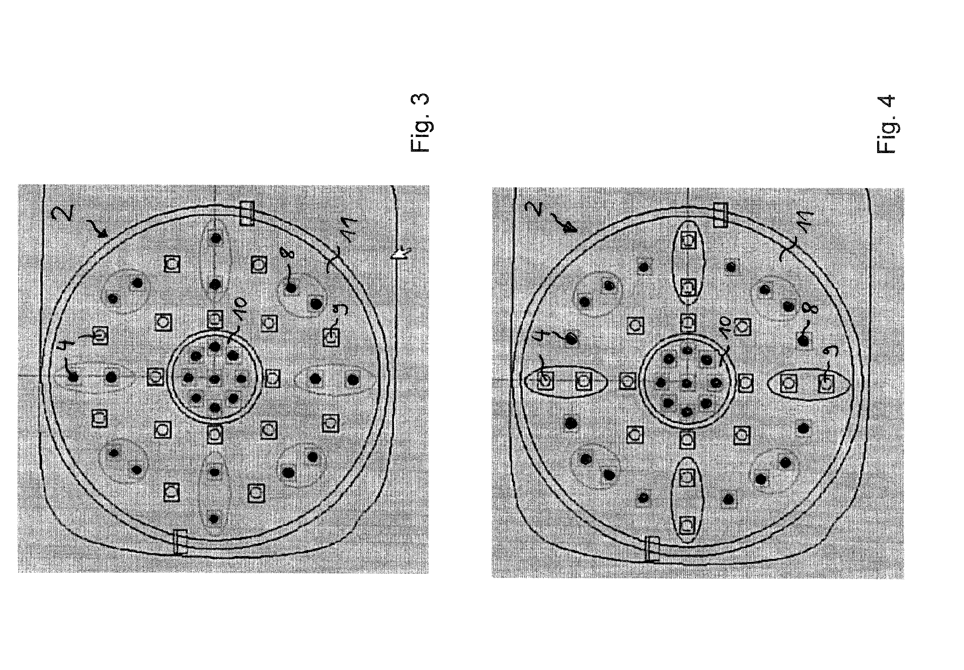

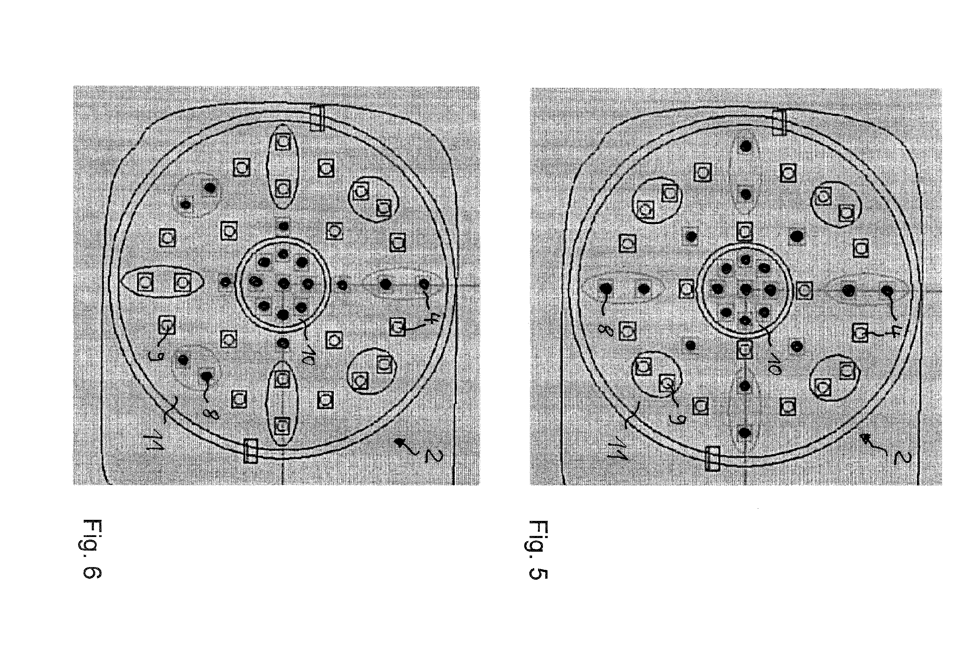

An exemplary embodiment of the lamp 2 which comprises a plurality of LEDs 4 is shown in FIGs. 2 to 6 in different states of operation. Each of the figures show a state of operation wherein a different light pattern is used. The LEDs 4 which are turned on in the respective light pattern are symbolized in each case with a filled circle 8 and the LEDs which are turned off in the respective light pattern are in each case symbolized with an unfilled circle 9.

As can be seen in FIGs. 2 to 6, the LEDs 4 in an inner segment 10 of the lamp unit 2 are in each case turned on in the different light patterns. This may be necessary, for example, due to legal requirements concerning the brightness of the automotive rear lamp unit. However, the number of LEDs and the arrangement of the LEDs which are turned on in an outer segment 11 of the lamp unit 2 is different from light pattern to light pattern. Preferably, the user can select one of these light patterns according to his own taste.

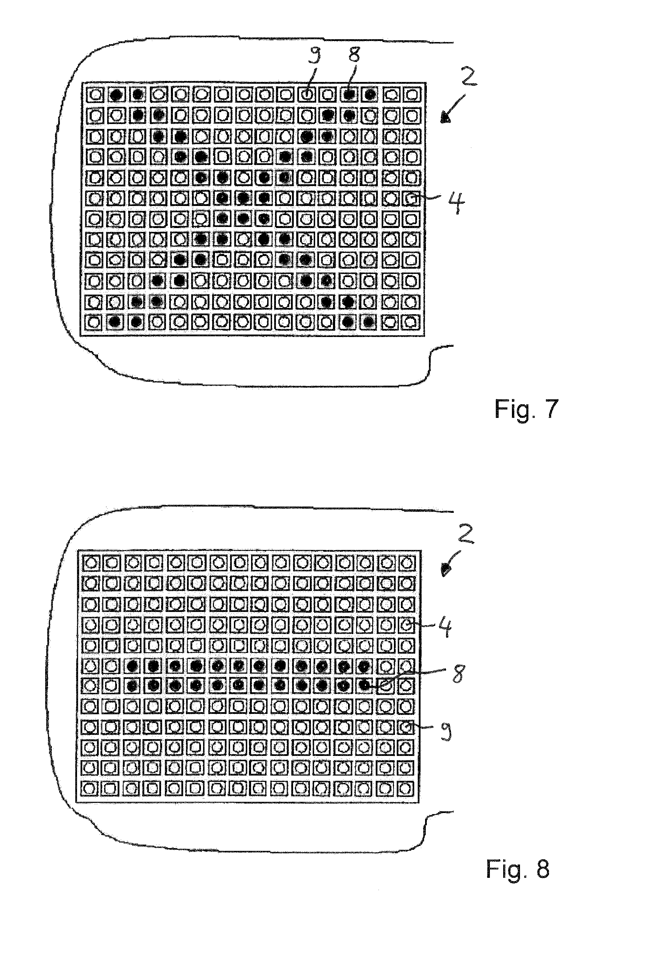

FIG. 7 and FIG. 8 show a further exemplary embodiment of a lamp unit 2 in two different states of operation. In this case, the LEDs 4 are arranged in a rectangular array of 12 x 16 LEDs. As in FIGs. 2 to 6, the LEDs which are turned on in the respective light pattern are symbolized by a filled circle 8 and the LEDs which are turned off in the respective light pattern are symbolized by an unfilled circle 9. In the light pattern which is shown in FIG. 7, the LEDs 4 in operation show a cross and in the light pattern which is shown in FIG. 8, the LEDs 4 in operation show a horizontal bar.

It is possible that one of the predefined light patterns is used as a light pattern for the rear lamp and one of the light patterns is used for the brake lamp. For example, the light pattern in the form of a cross, which is shown in FIG. 7, can be used for the brake lamp and the light pattern in the form of a bar, which is shown in FIG. 8, can be used for the rear lamp.

The scope of protection of the invention is not limited to the examples given hereinabove. The invention is embodied in each novel characteristic and each combination of characteristics, which particularly includes every combination of any features which are stated in the claims, even if this feature or this combination of features is not explicitly stated in the claims or in the examples.

## Claims

1. Automotive rear lamp unit (1), comprising
- a lamp (2) having a plurality of LEDs (4),
- a data storage device (3) for storing a plurality of predefined light patterns, and
- a control unit (5) connected to the data storage device (3) and the lamp unit (2) for operating the LEDs (4) according to the predefined light patterns.

2. Automotive rear lamp unit according to claim 1,
wherein the control unit (5) or the data storage device (3) comprises an interface for downloading the predefined light patterns.

3. Automotive rear lamp unit according to claim 1 or 2, wherein the data storage device (3) is a removable medium.

4. Automotive rear lamp unit according to one of the preceding claims,
wherein the control unit (5) is adapted for allowing the selection of at least one of the predefined light patterns by the user.

5. Automotive rear lamp unit according to one of the preceding claims,
wherein the plurality of LEDs (4) form an LED array.

6. Method for operating an automotive rear lamp unit according to one of the preceding claims, comprising:
- storing a plurality of predefined light patterns in the data storage device (3), and
- operating the plurality of LEDs (4) of the lamp (2) according to at least one of the predefined light patterns.

7. Method for operating an automotive rear lamp unit according to claim 6,
wherein the at least one predefined light pattern is selectable by a user from the plurality of predefined light patterns.

8. Method for operating an automotive rear lamp unit according to claim 6 or 7,
wherein the control unit (5) automatically changes the light pattern from time to time.

9. Method for operating an automotive rear lamp unit according to one of claims 6 to 8,
wherein the lamp (2) functions both as a rear lamp and a brake lamp.

10. Method for operating an automotive rear lamp unit according to claim 9,
wherein at least one of the predefined light patterns is used as a rear lamp light pattern and a different one of the predefined light patterns is used as a brake lamp light pattern.

11. Method for operating an automotive rear lamp unit according to claim 10,
wherein the rear lamp light pattern and the brake lamp light pattern are different with respect to the operated LEDs (4).

12. Method for operating an automotive rear lamp unit according to one of claims 6 to 11,
wherein at least one of the predefined light patterns is not constant in time.
